# FASCICULE DE BREVET EUROPEEN

(11) **EP 2 599 088 B1**
(45) Date de publication et mention de la délivrance du brevet: **03.12.2014**
(21) Numéro de dépôt: 11752292.0
(22) Date de dépôt: 26.07.2011
(51) Int. Cl.: G21C 17/08, G21C 19/19, G21C 17/10

(54) **PROCÉDÉ DE CONTRÔLE DES POSITIONS DES ASSEMBLAGES DE COMBUSTIBLES NUCLÉAIRES À L'INTÉRIEUR D'UN COEUR DE RÉACTEUR NUCLÉAIRE, ET ENSEMBLE DE CONTRÔLE CORRESPONDANT**
VERFAHREN ZUR STEUERUNG DER POSITIONEN VON KERNBRENNSTABBÜNDELN IN EINEM KERNREAKTORKERN UND ZUGEHÖRIGE STEUERANORDNUNG
METHOD FOR CONTROLLING THE POSITIONS OF NUCLEAR FUEL ASSEMBLIES INSIDE A NUCLEAR REACTOR CORE, AND CORRESPONDING CONTROL ASSEMBLY

(30) Priorité: 27.07.2010 FR 1056132
(43) Date de publication de la demande: 05.06.2013
(73) Titulaire: AREVA NP, 92400 Courbevoie (FR)
(72) Inventeur: TOURNANT, Audrey, F-71490 Creot (FR); MAGRE, Frédéric, Alain, F-76630 Envermeu (FR); LORIOT, Benjamin, F-71620 Saint Martin en Bresse (FR)
(74) Mandataire: Domenego, Bertrand
(86) Numéro de dépôt international: PCT/FR2011/051793
(87) Numéro de publication internationale: WO 2012/022890

(56) Documents cités:
- EP-A1- 1 884 957
- JP-A- 8 201 571
- JP-A- 2004 101 315
- US-A- 5 887 041

## Description

La présente invention concerne en général les procédés de contrôle des positions des assemblages de combustibles nucléaires à l'intérieur du coeur d'un réacteur nucléaire.

Le coeur d'un réacteur nucléaire comporte typiquement une pluralité d'assemblages de combustibles nucléaires de forme prismatique, reposant sur une plaque de support de coeur. Au-dessus des assemblages est placée une plaque supérieure de coeur (PSC) destinée, entre autres, à bloquer en position les embouts supérieurs des assemblages de combustibles nucléaires.

Les embouts supérieurs des assemblages de combustibles nucléaires comportent typiquement chacun deux trous, appelés « trous S », destinés à coopérer avec des pions de centrage de la plaque supérieure de coeur. Les pions de centrage font saillie sous la plaque supérieure de coeur et sont engagés chacun dans un trou S.

Il est important que les assemblages de combustibles nucléaires soient positionnés correctement à l'intérieur du coeur du réacteur nucléaire.

En effet, pendant les opérations de chargement du coeur, on met d'abord en place les assemblages de combustibles nucléaires à l'intérieur du coeur du réacteur, puis on replace la plaque supérieure de coeur et d'autres internes du réacteur. Lors de la mise en place de la PSC, les pions viennent s'engager dans les trous S. Si les pions et les trous S de certains assemblages sont décalés les uns par rapport aux autres, les pions de la PSC peuvent être entrés en force dans certains trous S.

Cela ne gêne en rien le fonctionnement du réacteur, mais lors de l'arrêt suivant du réacteur, quand la PSC est extraite hors du coeur, il y a un risque que des assemblages de combustibles nucléaires restent accrochés à la plaque supérieure du coeur pendant la levée de la PSC.

Une telle situation est particulièrement problématique.

Un procédé de contrôle de la position des trous des assemblages de combustible, qui coopèrent avec les pions de la plaque supérieur du coeur d'un réacteur nucléaire, est connu du document US 5,887,041 A.

Ainsi, il est nécessaire d'effectuer un contrôle extrêmement fiable des positions des assemblages de combustibles nucléaires du coeur par rapport à la plaque supérieure de coeur, après chargement des assemblages dans le coeur et avant mise en place de la plaque supérieure de coeur.

Dans ce contexte, l'invention vise à proposer un procédé de contrôle des positions d'une pluralité d'assemblages de combustibles nucléaires par rapport à la plaque supérieure de coeur, qui soit rapide et fiable.

A cette fin, l'invention porte selon un premier aspect sur un procédé de contrôle des positions d'une pluralité d'assemblages de combustibles nucléaires par rapport à une plaque supérieure de coeur dans un coeur de réacteur nucléaire, le procédé comprenant les étapes suivantes :
- choisir un point de référence dans des équipements internes ou dans une cuve du réacteur ;
- déterminer des positions de trous S des assemblages de combustibles nucléaires vis-à-vis du point de référence, chaque trou S étant prévu pour coopérer avec un pion de centrage correspondant de la plaque supérieure de coeur ;
- acquérir des positions des pions de centrage de la plaque supérieure de coeur vis-à-vis du point de référence ;
- comparer les positions des trous S et les positions des pions, et en déduire si les assemblages de combustibles nucléaires sont positionnés correctement par rapport à la plaque supérieure de coeur.

Le procédé peut également présenter une ou plusieurs des caractéristiques ci-dessous, considérer individuellement ou selon toutes les combinaisons techniquement possibles :
- le point de référence est une broche de guidage solidaire d'une enveloppe du coeur, la broche de guidage étant prévue pour coopérer avec une encoche de la plaque supérieure de coeur pour positionner la plaque supérieure de coeur par rapport à l'enveloppe du coeur,
- les positions des trous S par rapport au point de référence sont déterminées en prenant des images des assemblages de combustibles nucléaires, et en déterminant à l'aide desdites images les positions des trous S par rapport au point de référence,
- chaque image est adaptée pour donner les positions des trous S d'au moins un assemblage de combustible nucléaire donné et d'au moins un trou S d'un assemblage de combustible nucléaire voisin de l'assemblage de combustible nucléaire donné,
- une image globale de la pluralité d'assemblages de combustibles nucléaires est réalisée à partir des images des assemblages de combustibles nucléaires, l'image globale donnant les positions de tous les trous S de la pluralité d'assemblages de combustibles nucléaires,
- la comparaison des positions des trous S et des positions des pions est effectuée en comparant l'image globale de la pluralité d'assemblages de combustibles nucléaires à une image théorique de la plaque supérieure de coeur donnant les positions de tous les pions de centrage correspondants à tous les trous S de la pluralité d'assemblages de combustibles nucléaires,
- chaque assemblage de combustible nucléaire est considéré comme correctement positionné par rapport à la plaque supérieure de coeur si la comparaison de la position de chaque trou S dudit assemblage de combustible nucléaire avec la position du pion correspondant indique que le trou S et le pion présentent entre eux un écartement inférieure à une limite prédéterminée, par exemple 8 millimètres,
- les images sont prises à l'aide d'un appareil numérique d'acquisition d'images, déplacé par une machine de chargement des assemblages de combustibles nucléaires,
- la pluralité d'assemblage de combustibles nucléaires comprend au moins un quart des assemblages de combustibles nucléaires du coeur, de préférence au moins la moitié.

L'invention porte sur un second aspect sur un ensemble de contrôle des positions d'une pluralité d'assemblages de combustibles nucléaires par rapport à une plaque supérieure de coeur dans un coeur de réacteur nucléaire, comprenant :
- un dispositif adapté pour déterminer des positions de trous S des assemblages de combustibles nucléaires vis-à-vis d'un point de référence, chaque trou S étant prévu pour coopérer avec un pion de centrage correspondant de la plaque supérieure de coeur, le point de référence étant choisi dans des équipements internes ou dans une cuve du réacteur ;
- un dispositif adapté pour déterminer des positions des pions de centrage de la plaque supérieure de coeur (3) vis-à-vis du point de référence ;
- un dispositif adapté pour comparer les positions des trous S et les positions des pion, et en déduire si les assemblages de combustibles nucléaires sont positionnés correctement par rapport à la plaque supérieure de coeur.

D'autres caractéristiques et avantages de l'invention ressortiront de la description détaillée qui en est donnée ci-dessous, à titre indicatif et nullement limitatif, en référence aux figures annexées, parmi lesquelles :
- la figure 1 est une représentation schématique en coupe d'une partie du coeur d'un réacteur nucléaire, et d'un dispositif permettant de mettre en oeuvre le procédé de contrôle de l'invention, la plaque supérieure de coeur étant représentée en traits interrompus afin de situer sa position, ladite plaque n'étant pas en place lors du contrôle ;
- la figure 2 est une représentation schématique, en vue de dessus, de la partie du coeur représentée sur la figure 1 ;
- la figure 3 est une vue de dessous de la plaque supérieure de coeur de la figure 1, seule une partie des détails de la plaque étant représentée ;
- la figure 4 est une vue agrandie d'un détail IV de la figure 3, en coupe, une broche d'indexage de la plaque étant également représentée ;
- la figure 5 est une vue de côté, avec coupe partielle, du détail de la figure 4 ;
- la figure 6 est une vue agrandie d'un pion de la plaque supérieure de coeur engagé dans un trou S d'un embout supérieur d'un assemblage de combustible nucléaire ;
- la figure 7 est une représentation schématique montrant l'ordre dans lequel sont prises les vues des assemblages de combustibles nucléaires ;
- la figure 8 montre un exemple de prise de vue ; et
- la figure 9 est un diagramme d'étapes, indiquant les principales étapes du procédé de l'invention.

Comme indiqué ci-dessus, le procédé de l'invention vise à contrôler les positions d'une pluralité d'assemblages de combustibles nucléaires 1 par rapport à une plaque supérieure de coeur 3 dans le coeur 5 d'un réacteur nucléaire.

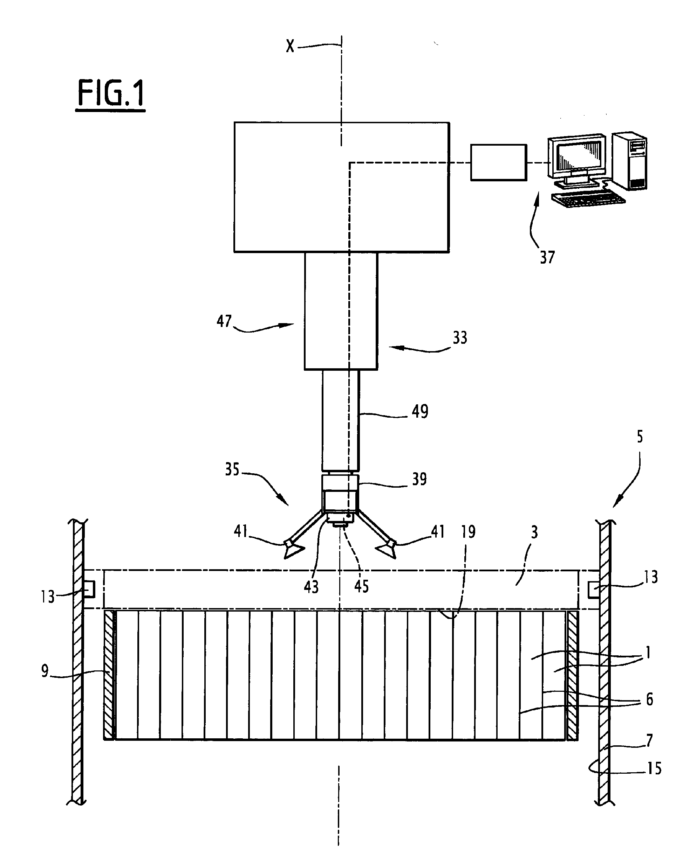

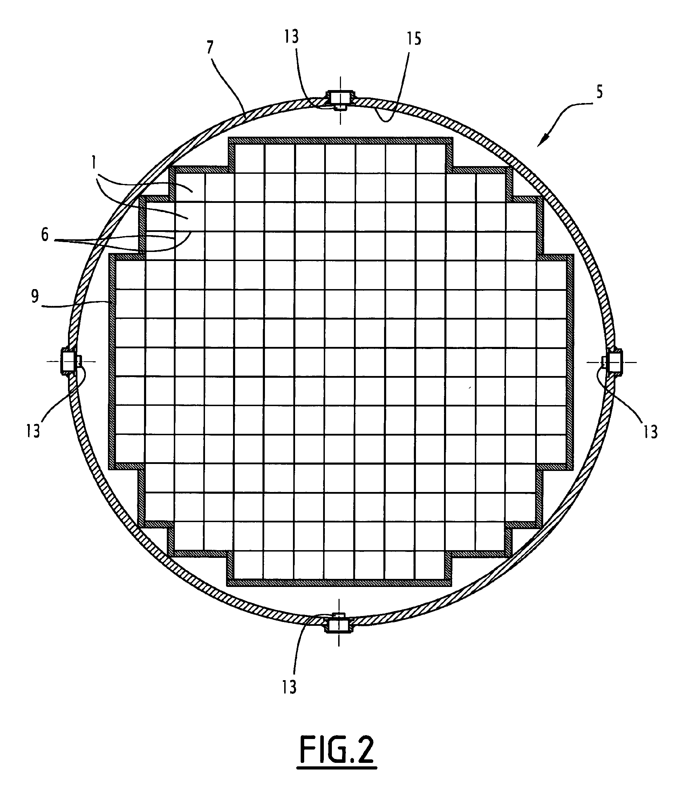

Le coeur 5 d'un réacteur nucléaire est représenté partiellement, de manière schématique, sur les figures 1 et 2. Le coeur 5 comporte un grand nombre d'assemblages de combustibles nucléaires 1, de formes prismatiques. Chaque assemblage 1 présente une forme allongée suivant l'axe central X du coeur de réacteur nucléaire. Les assemblages 1 sont disposés dans le coeur du réacteur nucléaire les uns à côté des autres, de telle sorte que les faces latérales 6 de deux assemblages voisins soient en regard l'un de l'autre et à proximité immédiate l'un de l'autre.

Chaque assemblage comporte une ossature à l'intérieure de laquelle sont placés des crayons de combustibles nucléaires. L'ossature comporte, entre autres, un embout supérieur et un embout inférieur.

Les assemblages 1 reposent par leurs embouts inférieurs sur une plaque de fond de coeur, non représentée. La plaque supérieure de coeur 3 est disposée axialement immédiatement au-dessus des assemblages 1.

Le coeur comporte encore une enveloppe de coeur 7 sensiblement cylindrique, coaxiale à l'axe X. L'enveloppe 7 contribue à canaliser la circulation du fluide primaire dans le coeur du réacteur. Une cloison 9 est placée autour des assemblages de combustibles 1, entre les assemblages 1 et l'enveloppe de coeur 7. La cloison 9 a pour fonction de bloquer les assemblages 1 en position, et contribue à canaliser la circulation du fluide primaire à travers les assemblages. Les assemblages sont positionnés dans le coeur de manière régulière, par exemple selon un réseau à pas carré.

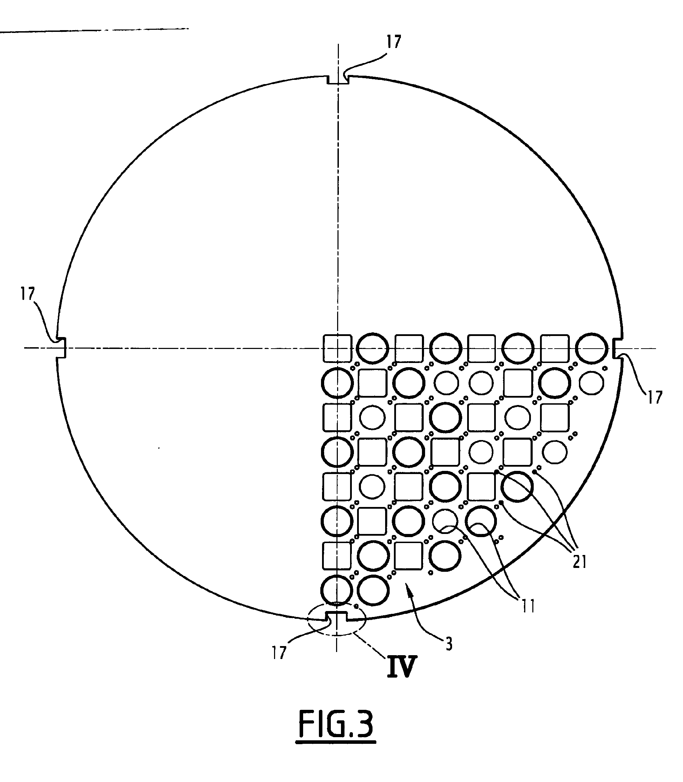

La plaque supérieure de coeur 3, comme le montre la figure 3, est une plaque sensiblement circulaire de diamètre externe correspondant sensiblement au diamètre interne de l'enveloppe de coeur 7. Elle est centrée sur l'axe X et sensiblement perpendiculaire à l'axe X. Elle présente une pluralité d'orifices 11, par exemple prévus pour le passage des tubes guides des grappes de contrôle de la réactivité du réacteur, ou pour la circulation du fluide primaire. Seule une partie des orifices 11 est représentée sur la figure 3.

La plaque de support de coeur 3 est bloquée en position angulairement autour de l'axe central X par rapport à l'enveloppe de coeur 5 par des broches 13 rigidement fixées à l'enveloppe de coeur. Les broches 13 font saillie radialement vers l'intérieur de l'enveloppe de coeur 7 par rapport à la surface radialement interne 15 de l'enveloppe de coeur (figures 2, 4, 5).

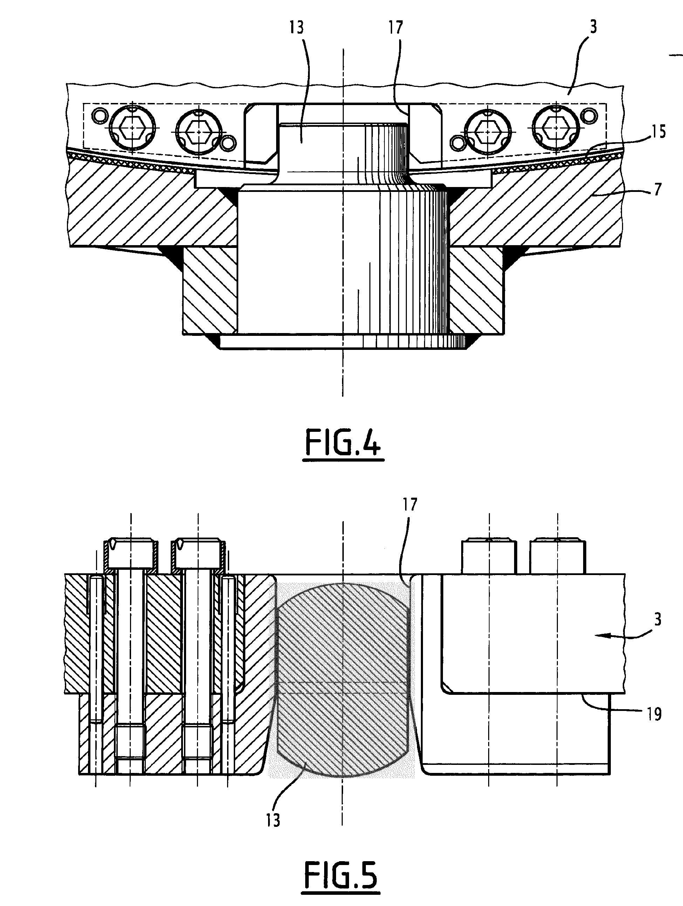

Elles coopèrent avec des encoches 17, ménagées à la périphérie de la plaque supérieure de coeur 3. Comme visible sur les figures 4 et 5, les encoches 17 présentent chacune une largeur circonférentielle légèrement supérieure à celle des broches de guidage 13. Les encoches 17 s'étendent axialement sur toute l'épaisseur de la plaque supérieure de coeur. Les broches 13 sont engagées dans les encoches 17, la plaque supérieure de coeur 3 étant ainsi bloquée en rotation par rapport à l'enveloppe de coeur 5 et libre axialement par rapport à celle-ci.

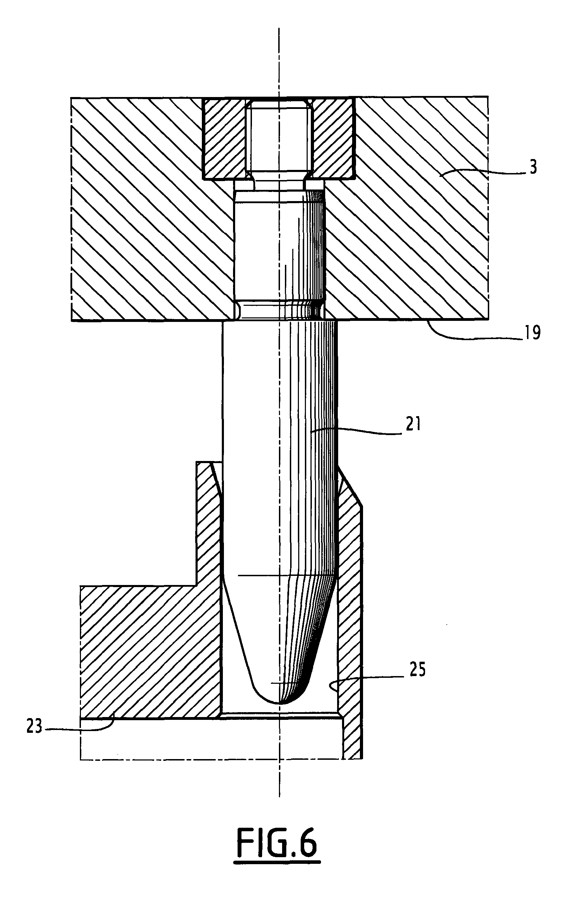

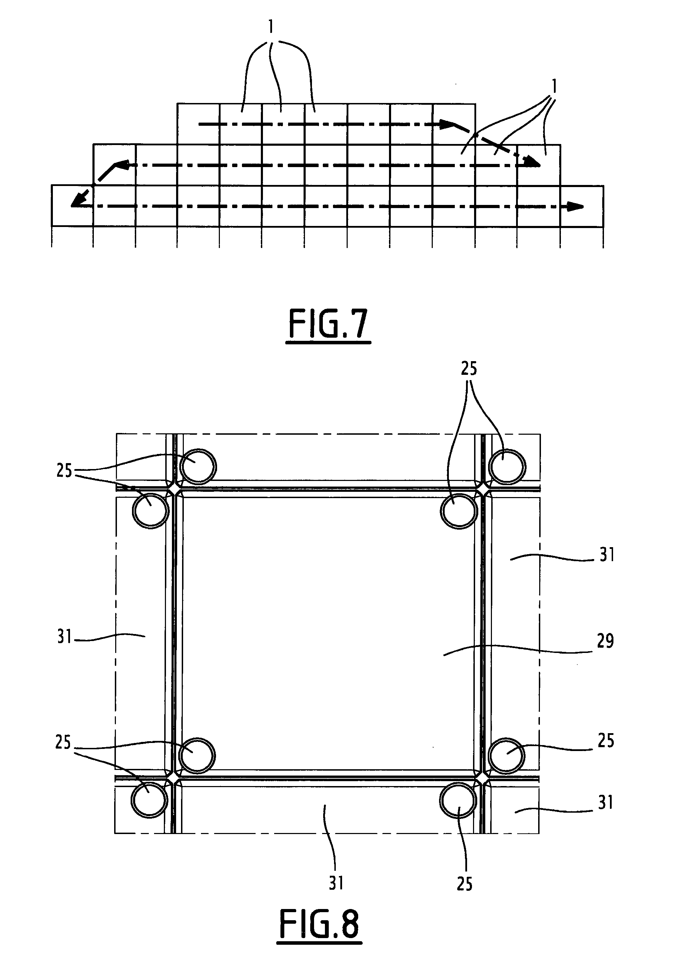

La plaque supérieure de coeur 3 présente sur une face inférieure 19 tournée vers les assemblages de combustibles nucléaires 1 une pluralité de pions de centrage 21 (figure 6). Les pions 21 font saillie par rapport à la face 19 vers les assemblages de combustibles. Les embouts supérieurs 23 des assemblages de combustibles présentent typiquement chacun deux trous 25 destinés chacun à recevoir un pion 21, appelés trous S. Comme visible sur la figure 8, considérés en section perpendiculairement à l'axe X, les embouts supérieurs 23 présentent une section carrée, les trous S 25 étant situés à deux angles opposés de ladite section. Les trous S 25 sont ouverts vers le haut, c'est-à-dire vers la plaque supérieure de coeur, comme visible sur la figure 6. Les pions 21 ont pour fonction de maintenir en position chacun l'embout supérieur d'un assemblage 1.

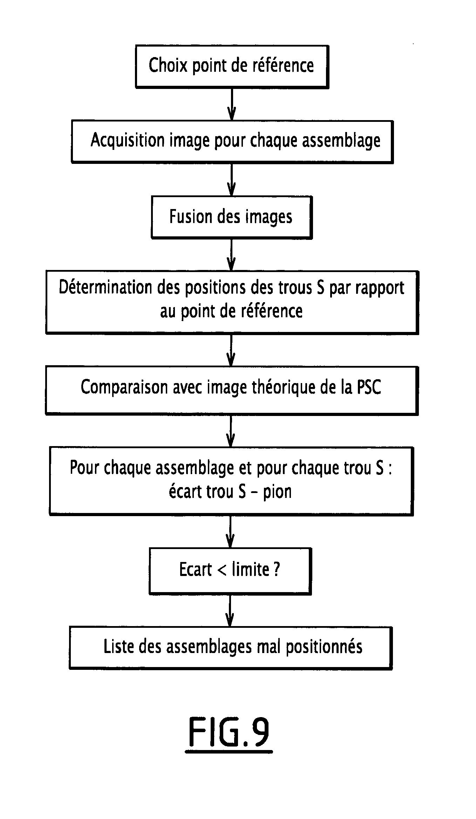

Le procédé de contrôle de l'invention, dont les principales étapes sont identifiées sur la figure 9, vise à vérifier que les assemblages de combustibles nucléaires, après chargement dans le coeur, sont bien positionnés par rapport à la plaque supérieure de coeur 3. Plus précisément, le procédé vise à déterminer si les trous S 25 des assemblages de combustibles nucléaires sont positionnés correctement par rapport aux pions 21 de la plaque supérieure de coeur.

Le procédé comprend les étapes suivantes :
- choisir un point de référence dans les équipements internes du coeur ou dans la cuve du réacteur ;
- déterminer les positions des trous S 25 des assemblages de combustibles nucléaires vis-à-vis du point de référence ;
- acquérir les positions des pions de centrage 21 de la plaque supérieure de coeur vis-à-vis du point de référence ;
- comparer les positions des trous S 25 et les positions des pions 21 ;
- en déduire si les assemblages de combustibles nucléaires sont positionnés correctement par rapport à la plaque supérieure de coeur.

Le point de référence est de préférence un élément dont on connaît la position avec une bonne précision par rapport à la plaque supérieure de coeur. Typiquement, le point de référence est l'une des broches de guidage 13 permettant d'indexer en position la plaque supérieure de coeur par rapport à l'enveloppe de coeur. Typiquement, l'incertitude sur les positions des pions 21 par rapport aux broches de centrage 13 est de l'ordre de 1 millimètre.

La détermination des positions des trous S 25 des assemblages de combustibles nucléaires vis-à-vis du point de référence est réalisée en prenant des images des assemblages 1, et en déterminant à l'aide desdites images les positions des trous S par rapport au point de référence.

Plus précisément, on acquiert une image pour chaque assemblage de combustible 1. Le dispositif de prise d'image est placé au-dessus de l'embout supérieur 23 de l'assemblage à photographier, l'axe optique de l'appareil de prise d'image étant sensiblement parallèle à l'axe central X. La taille de chaque image acquise est adaptée pour permettre l'identification sur ladite image des trous S de l'assemblage photographié, et d'au moins un trou S25 d'un assemblage de combustibles nucléaires voisin de l'assemblage photographié. Comme visible sur la figure 8, quand les assemblages sont disposés selon un réseau à pas carrés, chaque assemblage 29 est entouré de huit assemblages voisins 31. L'embout supérieur de chaque assemblage présente deux trous S 25 disposés à deux angles de l'embout situé sur une diagonale. Typiquement, tous les assemblages sont disposés selon la même orientation, de telle sorte que les trous S 25 des différents assemblages sont situés sur la même diagonale. Ainsi, plusieurs des assemblages 31 voisins de l'assemblage 29 présentent sur des bords jouxtant l'assemblage 29 un trou S 25. Dans l'exemple représenté sur la figure 8, six des assemblages voisins de l'assemblage 29 présentent un trou S 25 jouxtant l'assemblage 29.

Ainsi, dans cet exemple, l'image de l'assemblage 29 permet l'identification non seulement des deux trous S de l'assemblage 29, mais également d'un trou S pour six des assemblages voisins.

Comme visible sur la figure 7, on acquiert les images assemblage par assemblage, suivant un ordre prédéfini. Par exemple, les assemblages sont traités rangée par rangée. On parcourt ainsi une première rangée, à partir de l'assemblage situé à une première extrémité de la rangée. On photographie ensuite l'assemblage voisin, et on suit la rangée jusqu'à l'assemblage situé à la deuxième extrémité de la rangée. La rangée voisine est ensuite traitée, par exemple en sens inverse. Un tel parcours en S permet de minimiser le temps de déplacement de l'appareil de prise d'image d'un assemblage à un autre.

Une fois les images de chacun des assemblages de combustibles nucléaires acquises, une image globale de tous les assemblages de combustibles nucléaires est réalisée à partir des images préalablement acquises. L'image globale donne les positions de tous les trous S de tous les assemblages de combustibles nucléaires les uns par rapport aux autres. L'image globale est réalisée en fusionnant par calcul les images acquises.

Les positions des différentes images les unes par rapport aux autres peuvent être ajustées avec précision du fait que chaque image comporte des trous S 25 figurant aussi sur d'autres images, comme indiqué ci-dessus.

Les positions des trous S par rapport au point de référence sont ensuite déterminées à partir de l'image globale. Pour ce faire, il est nécessaire de connaître avec précision la position d'au moins un trou 25 par rapport au point de référence.

Cette position peut être déterminée de multiples façons. Par exemple, il est possible d'acquérir une image supplémentaire, montrant à la fois la broche de guidage servant de point de référence et les trous 25 d'un assemblage situé à proximité de la broche 13.

Alternativement, il est possible d'acquérir une image montrant la position des trous 25 d'un assemblage vis-à-vis d'un élément du coeur dont la position par rapport à la broche de guidage est connue avec précision. Cet élément peut par exemple être un élément de la cloison 9. Il est également possible d'utiliser à cette fin l'une des images acquises pour un assemblage situé à côté de la cloison.

La comparaison des positions des trous S et des positions des pions est effectuée en comparant l'image globale préalablement réalisée à une image théorique de la plaque supérieure de coeur donnant les positions des différents pions de centrage par rapport au point de référence. Cette image typiquement est une image numérique prédéterminée, enregistrée dans une base de données. Elle est par exemple reconstituée à partir des plans de fabrication des éléments du coeur du réacteur nucléaire, notamment des plans de fabrication de l'enveloppe de coeur et de la plaque supérieure de coeur.

La comparaison est effectuée en superposant l'image globale à l'image théorique de la plaque supérieure de coeur. La superposition est effectuée sur un calculateur, automatiquement. En variante, la superposition est effectuée manuellement par un opérateur.

Ensuite, pour chaque trou S 25 de chaque assemblage, l'écart entre le trou S et le pion 21 correspondant de la plaque supérieure de coeur 3 est déterminé. Pour cela, on considère par exemple la distance entre le centre du trou S 25 et le centre du pion 21 correspondant dans la superposition, telle qu'elle ressort de la superposition de l'image théorique et de l'image globale. Lesdites positions correspondent aux positions dans un plan sensiblement perpendiculaire à l'axe central X du coeur du réacteur. L'écartement correspond à la distance entre les deux centres dans ledit plan perpendiculaire à l'axe X. L'écartement est calculé automatiquement, ou encore déterminé graphiquement par un opérateur.

Ensuite, les écarts trouvés pour chaque trou S sont comparés à une limite prédéterminée. La limite est par exemple égale à 8 millimètres, de préférence égale à 4 millimètres, et encore de préférence égale à 2 millimètres.

Si l'écart trouvé pour l'un des trous S d'un assemblage est supérieur à la limite, l'assemblage est considéré comme étant mal positionné par rapport à la plaque supérieure de coeur. Si au contraire les écarts trouvés pour tous les trous S d'un assemblage sont inférieurs à la limite, l'assemblage est considéré comme étant bien positionné par rapport à la plaque supérieure de coeur.

Le procédé permet de fournir la liste de tous les trous S25 qui sont hors tolérance, c'est-à-dire dont les écarts calculés sont supérieurs à la limite prédéterminée. Le procédé permet également de fournir la liste des assemblages mal positionnés, avec éventuellement les numéros d'identification des assemblages mal positionnés. Le procédé peut également fournir les jeux inter assemblages, calculés à partir des positions des trous S25 des différents assemblages.

Le procédé décrit ci-dessus peut être mis en oeuvre par le dispositif représenté schématiquement sur la figure 1. Le dispositif 33 comporte un dispositif de prise d'images 35, et un calculateur 37. Le dispositif de prise d'images 35 comporte un support 39, des organes d'éclairage 41 fixés sur le support 39, un caisson étanche 43 fixé sur le support 39, et un appareil de prise d'images numérique 45 disposé à l'intérieur du caisson étanche. Le dispositif de prise d'image 35 est conçu pour être déplacé par la machine 47 de chargement des assemblages de combustibles nucléaires dans le coeur du réacteur. Pour ce faire, le support 39 comporte un organe d'accouplement prévu pour coopérer avec le mat 49 de la machine de chargement 47.

Le dispositif 33 est prévu pour que la puissance lumineuse de l'éclairage 41 puisse être ajustée à partir du calculateur 37, par exemple en fonction de l'état de surface des assemblages de combustibles nucléaires.

L'appareil de prise d'images est par exemple un appareil photographique numérique, ayant par exemple une résolution de 18 millions de pixels, permettant une résolution de 0,1 millimètre par pixels dans les conditions de fonctionnement envisagées. Ces conditions sont les suivantes :
- un champ de vue pour chaque image d'environ 300 millimètres / 400 millimètres ;
- une distance d'environ 2 mètres entre l'objectif de l'appareil photographique 45 et l'embout supérieur de l'assemblage à photographier ;
- une longueur focale de 100 millimètres environ.

L'appareil pourrait également être une caméra numérique.

L'appareil photographique 45 est raccordé au calculateur 37 par une liaison numérique, permettant l'échange de données entre le calculateur et l'appareil photographique. Cette liaison est par exemple du type Ethernet. Le dispositif est adapté pour permettre la commande de l'appareil photographique à distance par l'intermédiaire du calculateur 37, et le rapatriement des images depuis l'appareil photographique 45 jusqu'au calculateur 37.

Le caisson 43 est raccordé à un système de ventilation, non représenté, et maintenu à une pression interne de 2 bars.

Le calculateur 37 est programmé pour :
- commander l'acquisition d'images par l'appareil photographique pour chaque assemblage de combustibles nucléaires ;
- à partir des images acquises, fusionner les images de manière à constituer l'image globale des assemblages de combustibles nucléaires ;
- déterminer les positions des trous S par rapport au point de référence, à partir de l'image globale et par exemple d'une image donnant la position d'au moins un trou S par rapport au point de référence ;
- stocker l'image théorique de la plaque supérieure de coeur ;
- superposer l'image globale à l'image théorique de la plaque supérieure de coeur ;
- comparer les positions des trous S préalablement déterminées aux positions des pions ressortant de l'image théorique de la plaque supérieure de coeur ;
- déterminer les écarts entre chaque trou S et le pion correspondant ;
- comparer les écarts déterminés à la limite prédéterminée ;
- fournir la liste des trous S mal positionnés par rapport aux pions correspondants, la liste des assemblages mal positionnés par rapport à la plaque supérieure de coeur, éventuellement les identifications des assemblages de combustibles nucléaires mal positionnés, et éventuellement calculer les jeux inter assemblages.

Du fait que le procédé de contrôle comporte une étape de détermination des positions des trous S des assemblages de combustibles nucléaires vis-à-vis d'un point de référence dans les équipements internes ou dans la cuve du réacteur, et une étape d'acquisition des positions des pions de centrage de la plaque supérieure de coeur vis-à-vis du même point de référence, il est possible d'effectuer une comparaison très précise des positions des trous S et des positions des pions correspondants.

L'utilisation comme point de référence de la broche de guidage de la plaque supérieure de coeur est particulièrement bien adaptée, car la position de la plaque supérieure de coeur est connue de manière précise par rapport à cette broche.

Les positions des trous S par rapport au point de référence peuvent être déterminées de manière commode et rapide en prenant des images des assemblages à l'aide d'un équipement adapté. L'utilisation d'une image globale des assemblages de combustibles nucléaires, constituée en fusionnant les différentes images prises à l'aide du dispositif de prise d'images, permet de faire une comparaison rapide et précise avec la position des pions de la plaque supérieure de coeur. Ceci permet d'accélérer le procédé.

L'image globale peut être construite avec une bonne précision si chaque image prise avec le dispositif de prise d'images donne non seulement les positions des trous S d'un assemblage déterminé, mais également d'au moins un trou S d'un autre assemblage, servant de point de repère pour la juxtaposition des différentes images.

Le procédé est particulièrement rapide, le temps de mise en oeuvre étant par exemple d'environ quatre heures pour l'ensemble du coeur d'un réacteur nucléaire. Ceci est particulièrement important, car le contrôle de position des assemblages de combustibles nucléaires par rapport à la plaque supérieure de coeur est sur le chemin critique lors des opérations de déchargement et de rechargement des assemblages de combustibles nucléaires dans le coeur du réacteur. Du fait que les positions des trous S par rapport aux pions sont déterminées avec précision, le risque que les assemblages de combustibles nucléaires restent coincés lors de la levée de la plaque supérieure de coeur est minimisé.

En tout état de cause, pour des raisons d'économie, le procédé est appliqué à au moins un quart des assemblages de combustibles nucléaires du coeur, de préférence à au moins la moitié des assemblages de combustibles nucléaires du coeur, et encore de préférence à la totalité des assemblages de combustibles nucléaires du coeur.

En variante, la taille de chaque image peut être adaptée pour permettre la visualisation de deux assemblages voisins, et ainsi permettre de déterminer les positions des trous S des deux assemblages. La taille des images pourrait également être adaptée pour permettre la visualisation de quatre assemblages ou plus, sous réserve que la résolution de l'appareil de prise de vues soit suffisante.

## Revendications

1. Procédé de contrôle des positions d'une pluralité d'assemblages de combustibles nucléaires (1) par rapport à une plaque supérieure de coeur (3) dans un coeur (5) de réacteur nucléaire, le procédé comprenant les étapes suivantes :
- choisir un point de référence (13) dans des équipements internes ou dans une cuve du réacteur ;
- déterminer des positions de trous S (25) des assemblages de combustibles nucléaires (1) vis-à-vis du point de référence (13), chaque trou S (25) étant prévu pour coopérer avec un pion de centrage (21) correspondant de la plaque supérieure de coeur (3) ;
- acquérir des positions des pions de centrage (21) de la plaque supérieure de coeur (3) vis-à-vis du point de référence (13) ;
- comparer les positions des trous S (25) et les positions des pions (21), et en déduire si les assemblages de combustibles nucléaires (1) sont positionnés correctement par rapport à la plaque supérieure de coeur (3).

2. Procédé selon la revendication 1, **caractérisé en ce que** le point de référence est une broche de guidage (13) solidaire d'une enveloppe du coeur (5), la broche de guidage (13) étant prévue pour coopérer avec une encoche (17) de la plaque supérieure de coeur (3) pour positionner la plaque supérieure de coeur (3) par rapport à l'enveloppe du coeur (5).

3. Procédé selon la revendication 1 ou 2, **caractérisé en ce que** les positions des trous S (25) par rapport au point de référence (13) sont déterminées en prenant des images des assemblages de combustibles nucléaires (1), et en déterminant à l'aide desdites images les positions des trous S (25) par rapport au point de référence (13).

4. Procédé selon la revendication 3, **caractérisé en ce que** chaque image est adaptée pour donner les positions des trous S (25) d'au moins un assemblage de combustible nucléaire donné (29) et d'au moins un trou S (25) d'un assemblage de combustible nucléaire (31) voisin de l'assemblage de combustible nucléaire donné (29).

5. Procédé selon la revendication 3 ou 4, **caractérisé en ce qu'**une image globale de la pluralité d'assemblages de combustibles nucléaires (1) est réalisée à partir des images des assemblages de combustibles nucléaires (1), l'image globale donnant les positions de tous les trous S (25) de la pluralité d'assemblages de combustibles nucléaires (1).

6. Procédé selon la revendication 5, **caractérisé en ce que** la comparaison des positions des trous S (25) et des positions des pions (21) est effectuée en comparant l'image globale de la pluralité d'assemblages de combustibles nucléaires (1) à une image théorique de la plaque supérieure de coeur (3) donnant les positions de tous les pions de centrage (21) correspondants à tous les trous S (25) de la pluralité d'assemblages de combustibles nucléaires (1).

7. Procédé selon la revendication 6, **caractérisé en ce que** chaque assemblage de combustible nucléaire (1) est considéré comme correctement positionné par rapport à la plaque supérieure de coeur (3) si la comparaison de la position de chaque trou S (25) dudit assemblage de combustible nucléaire (1) avec la position du pion (21) correspondant indique que le trou S (25) et le pion (21) présentent entre eux un écartement inférieure à une limite prédéterminée, par exemple 8 millimètres.

8. Procédé selon l'une quelconque des revendications 3 à 7, **caractérisé en ce que** les images sont prises à l'aide d'un appareil numérique (45) d'acquisition d'images, déplacé par une machine (47) de chargement des assemblages de combustibles nucléaires (1).

9. Procédé selon l'une quelconque des revendications précédentes, **caractérisé en ce que** la pluralité d'assemblage de combustibles nucléaires (1) comprend au moins un quart des assemblages de combustibles nucléaires (1) du coeur (5), de préférence au moins la moitié.

10. Ensemble de contrôle des positions d'une pluralité d'assemblages de combustibles nucléaires (1) par rapport à une plaque supérieure de coeur (3) dans un coeur (5) de réacteur nucléaire, l'ensemble de contrôle comprenant :
- un dispositif adapté pour déterminer des positions de trous S (25) des assemblages de combustibles nucléaires (1) vis-à-vis d'un point de référence (13), chaque trou S (25) étant prévu pour coopérer avec un pion de centrage (21) correspondant de la plaque supérieure de coeur (3), le point de référence (13) étant choisi dans des équipements internes ou dans une cuve du réacteur ;
**caractérisé en ce que** l'ensemble de contrôle comporte de plus:
- un dispositif adapté pour déterminer des positions des pions de centrage (21) de la plaque supérieure de coeur (3) vis-à-vis du point de référence (13) ; et
- un dispositif adapté pour comparer les positions des trous S (25) et les positions des pion (21), et en déduire si les assemblages de combustibles nucléaires (1) sont positionnés correctement par rapport à la plaque supérieure de coeur (3).

## Patentansprüche

1. Verfahren zur Kontrolle von Positionen einer Mehrzahl von Nuklearbrennstoffanordnungen (1) bezüglich einer oberen Kernplatte (3) in einem Nuklearreaktorkern (5), wobei das Verfahren die folgenden Schritte aufweist:
- Wählen eines Referenzpunkts (13) in internen Apparaturen oder in einem Reaktorbehälter,
- Ermitteln von Positionen von Löchern S (25) der Nuklearbrennstoffanordnungen (1) gegenüber dem Referenzpunkt (13), wobei jedes Loch S (25) vorgesehen ist zum Kooperieren mit einem Zentrierstift (21), der zu der oberen Kernplatte (3) gehört,
- Erlangen von Positionen des Zentrierstifts (21) der oberen Kernplatte (3) gegenüber dem Referenzpunkt (13),
- Vergleichen der Positionen der Löcher S (25) und der Positionen der Stifte (21), und davon ableiten, ob die Nuklearbrennstoffanordnungen (1) bezüglich der oberen Kernplatte (3) korrekt positioniert sind.

2. Verfahren gemäß Anspruch 1, **dadurch gekennzeichnet, dass** der Referenzpunkt ein Führungszapfen (13) ist, der mit einer Umhüllung des Kerns (5) fest verbunden ist, wobei der Führungszapfen (13) vorgesehen ist zum Kooperieren mit einer Aussparung (17) der oberen Kernplatte (3) zum Positionieren der oberen Kernplatte (3) bezüglich der Umhüllung des Kerns (5).

3. Verfahren gemäß Anspruch 1 oder 2, **dadurch gekennzeichnet, dass** die Positionen der Löcher S (25) bezüglich des Referenzpunkts (13) ermittelt werden durch Nehmen von Bildern der Nuklearbrennstoffanordnungen (1) und durch Ermitteln, mit Hilfe dieser Bilder, der Positionen der Löcher S (25) bezüglich des Referenzpunkts (13).

4. Verfahren gemäß Anspruch 3, **dadurch gekennzeichnet, dass** jedes Bild angepasst ist zum Geben der Positionen der Löcher S (25) wenigstens einer gegebenen Nuklearbrennstoffanordnung (29) und wenigstens eines Lochs S (25) einer Nuklearbrennstoffanordnung (31), die zu der gegebenen Nuklearbrennstoffanordnung (29) benachbart ist.

5. Verfahren gemäß Anspruch 3 oder 4, **dadurch gekennzeichnet, dass** ein globales Bild der Mehrzahl von Nuklearbrennstoffanordnungen (1) realisiert ist ausgehend von den Bildern der Nuklearbrennstoffanordnungen (1), wobei das globale Bild die Positionen von allen Löchern S (25) der Mehrzahl von Nuklearbrennstoffanordnungen (1) gibt.

6. Verfahren gemäß Anspruch 5, **dadurch gekennzeichnet, dass** der Vergleich der Positionen der Löcher S (25) und der Positionen der Stifte (21) durchgeführt wird durch Vergleichen des globalen Bilds der Mehrzahl von Nuklearbrennstoffanordnungen (1) mit einem theoretischen Bild der oberen Kernplatte (3), welches die Positionen von allen Zentrierstiften (21) gibt, die zu allen Löchern S (25) der Mehrzahl von Nuklearbrennstoffanordnungen (1) korrespondieren.

7. Verfahren gemäß Anspruch 6, **dadurch gekennzeichnet, dass** jede Nuklearbrennstoffanordnung (1) betrachtet wird als korrekt positioniert bezüglich der oberen Kernplatte (3), wenn der Vergleich der Position jedes Lochs S (25) dieser Nuklearbrennstoffanordnung (1) mit der Position des korrespondierenden Stifts (21) anzeigt, dass das Loch S (25) und der Stift (21) zwischen sich einen Abstand haben, der kleiner ist als ein vorbestimmtes Limit, z.B. 8 Millimeter.

8. Verfahren gemäß irgendeinem der Ansprüche 3 bis 7, **dadurch gekennzeichnet, dass** die Bilder mit Hilfe eines Digital-Bildaufnahmeapparats (45) genommen werden, der von einer Maschine (47) zum Laden der Nuklearbrennstoffanordnungen (1) verlagert wird.

9. Verfahren gemäß irgendeinem der vorhergehenden Ansprüche, **dadurch gekennzeichnet, dass** die Mehrzahl von Nuklearbrennstoffanordnungen (1) aufweist wenigstens ein Viertel der Nuklearbrennstoffanordnungen (1) des Kerns (5), bevorzugt wenigstens die Hälfte.

10. Einrichtung zur Kontrolle von Positionen einer Mehrzahl von Nuklearbrennstoffanordnungen (1) bezüglich einer oberen Kernplatte (3) in einem Nuklearreaktorkern (5), wobei die Einrichtung aufweist:
- eine Vorrichtung, die angepasst ist zum Ermitteln von Positionen von Löchern S (25) der Nuklearbrennstoffanordnungen (1) gegenüber einem Referenzpunkt (13), wobei jedes Loch S (25) vorgesehen ist zum Kooperieren mit einem Zentrierstift (21), der zu der oberen Kernplatte (3) gehört, wobei der Referenzpunkt (13) gewählt ist in internen Apparaturen oder in einem Reaktorbehälter,
**dadurch gekennzeichnet, dass** die Einrichtung zur Kontrolle ferner aufweist:
- eine Vorrichtung, die angepasst ist zum Ermitteln der Positionen der Zentrierstifte (21) der oberen Kernplatte (3) gegenüber dem Referenzpunkt (13) und
- eine Vorrichtung, die angepasst ist zum Vergleichen der Positionen der Löcher S (25) und der Positionen des Zapfens (21) und zum davon Ableiten, ob die Nuklearbrennstoffanordnungen (1) korrekt positioniert sind bezüglich der oberen Kernplatte (3).

## Claims

1. A method for controlling the positions of a plurality of nuclear fuel assemblies (1) in relation to an upper core plate (3) in a nuclear reactor core (5), the method comprising of the following steps :
- choosing a reference point (13) in the reactor internals or in a reactor vessel ;
- determining the positions of S holes (25) of the nuclear fuel assemblies (1) relative to the reference point (13), each S hole (25) being intended to cooperate with a corresponding centering pin (21) of the upper core plate (3) ;
- acquiring the positions of the centering pins (21) of the upper core plate (3) relative to the reference point (13) ;
- comparing the positions of the S holes (25) and the positions of the pins (21) and deducing therefrom whether the nuclear fuel assemblies (1) are correctly positioned in relation to the upper core plate (3).

2. A method according to claim 1, **characterised in that** the reference point is a guide pin (13) integrally attached to a core casing (5), the guide pin (13) being adapted so as to cooperate with a notch (17) of the upper core plate (3) in order to position the upper core plate (3) in relation to the core casing (5).

3. A method according to claim 1 or 2, **characterised in that** the positions of the S holes (25) relative to the reference point (13) are determined by taking images of the nuclear fuel assemblies (1), and determining with the aid of said images the positions of the S holes (25) relative to the reference point (13).

4. A method according to claim 3, **characterised in that** each image is adapted to provide the positions of the S holes (25) of at least one given nuclear fuel assembly (29) and at least one S hole (25) of a nuclear fuel assembly (31) adjacent to the given nuclear fuel assembly (29).

5. A method according to claim 3 or 4, **characterised in that** an overall image of the plurality of nuclear fuel assemblies (1) is developed from the various images of the nuclear fuel assemblies (1), the overall image providing the positions of all the S holes (25) of the plurality of nuclear fuel assemblies (1).

6. A method according to claim 5, **characterised in that** the comparison of the positions of the S holes (25) and the positions of the pins (21) is carried out by comparing the overall image of the plurality of nuclear fuel assemblies (1) to a theoretical image of the upper core plate (3) providing the positions of all of the centering pins (21) corresponding to all the S holes (25) of the plurality of nuclear fuel assemblies (1).

7. A method according to claim 6, **characterised in that** each nuclear fuel assembly (1) is considered to be correctly positioned in relation to the upper core plate (3) if the comparison of the position of each S hole (25) of said nuclear fuel assembly (1) with the position of the corresponding pin (21) indicates that the S hole (25) and the pin (21) have a distance between them that is less than a predetermined limit, for example 8 millimetres.

8. A method according to any one of claims 3 to 7, **characterised in that** the images are taken by means of a digital image capturing apparatus (45), moved by a machine (47) for loading nuclear fuel assemblies (1).

9. A method according to any one of the preceding claims, **characterised in that** the plurality of nuclear fuel assemblies (1) comprise at least one quarter of the nuclear fuel assemblies (1) of the core (5), and preferably at least half of them.

10. An assembly for controlling the positions of a plurality of nuclear fuel assemblies (1) in relation to an upper core plate (3) in a nuclear reactor core (5), the control assembly comprising:
- a device suitable for determining the positions of S holes (25) of nuclear fuel assemblies (1) relative to a reference point (13), each S hole (25) being intended to cooperate with a corresponding centering pin (21) of the upper core plate (3), the reference point (13) being chosen in the reactor internals or in a reactor vessel ;
**characterized in that** the control assembly further comprises:
- a device suitable for determining the positions of the centering pins (21) of the upper core plate (3) relative to the reference point (13) ; and
- a device suitable for comparing the positions of the S holes (25) and the positions of the pins (21), and deducing therefrom whether the nuclear fuel assemblies (1) are correctly positioned relative to the upper core plate (3).
